(19) **Europäisches Patentamt**
**European Patent Office**
**Office européen des brevets**

(11) **EP 4 668 472 A1**

(12) **EUROPEAN PATENT APPLICATION**
published in accordance with Art. 153(4) EPC

(43) Date of publication:
**24.12.2025 Bulletin 2025/52**

(21) Application number: **24777448.2**

(22) Date of filing: **17.01.2024**

(51) International Patent Classification (IPC):
*H01M 50/627* (2021.01)    *H01M 50/152* (2021.01)
*H01M 4/70* (2006.01)    *H01M 50/342* (2021.01)

(52) Cooperative Patent Classification (CPC):
Y02E 60/10

(86) International application number:
**PCT/CN2024/072802**

(87) International publication number:
**WO 2024/198653 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 CN 202310331804**

(71) Applicant: **Xiamen Hithium Energy Storage
Technology Co., Ltd.
Xiamen, Fujian 361100 (CN)**

(72) Inventor: **XIONG, Yongfeng
Xiamen, Fujian 361100 (CN)**

(74) Representative: **Viering, Jentschura & Partner
mbB
Patent- und Rechtsanwälte
Am Brauhaus 8
01099 Dresden (DE)**

(54) **END COVER ASSEMBLY, ENERGY STORAGE APPARATUS, AND END COVER ASSEMBLY INSTALLATION POSITIONING METHOD**

(57) An end cover assembly, an energy storage apparatus (100), and method for mounting and positioning an end cover assembly are provided. The end cover assembly includes an end cover (1) and a current-collector disk (2). The end cover (1) is provided with an explosion-proof valve (11) and defines a liquid-injection hole (12). The liquid-injection hole (12) is spaced apart from the explosion-proof valve (11). The current-collector disk (2) is coaxial with the end cover (1). The current-collector disk (2) includes a main body portion (21). The main body portion (21) defines a groove (22) on a surface of the main body portion (21) positioned facing towards the end cover (1). The groove (22) extends from a center of the main body portion (21) to an edge of the main body portion (21) in a radial direction of the main body portion (21). The main body portion (21) is provided with a visual identification portion (25). The visual identification portion (25) has a visual identification characteristic different from a region of the main body portion (21) other than the visual identification portion (25). The liquid-injection hole (12) is configured for alignment of the end cover (1) and the current-collector disk (2) through the visual identification portion (25).

FIG. 2

## Description

This application claims priority to Chinese Patent Application No. 202310331804.9, filed with the China National Intellectual Property Administration on March 30, 2023 and entitled "END COVER ASSEMBLY, ENERGY STORAGE APPARATUS, AND METHOD FOR MOUNTING AND POSITIONING END COVER ASSEMBLY", the entire disclosure of which is hereby incorporated by reference.

## TECHNICAL FIELD

This disclosure relates to the field of battery production and manufacturing technology, and in particular, to an end cover assembly, an energy storage apparatus, and a method for mounting and positioning an end cover assembly.

## BACKGROUND

An energy storage apparatus mainly uses chemical elements in a cell as an energy storage medium. A charging and discharging process is accompanied by a chemical reaction or change of the energy storage medium. In short, electric energy generated from wind energy and solar energy is stored in a chemical cell, is released for use when the use of external electric energy reaches a peak, or is transferred to a place experiencing power shortage for subsequent use.

Taking a cylindrical cell in the energy storage apparatus as an example, the cylindrical cell including a casing, an end cover, and an electrode assembly. A current-collector disk is welded to each of two ends of the electrode assembly. The end cover is fixedly connected to an opening end of the casing to define a sealed cavity. The electrode assembly is in the sealed cavity. The current-collector disk positioned at the bottom of the electrode assembly is welded to the bottom of the casing, and the current-collector disk positioned at the top of the electrode assembly is electrically connected to a terminal post on the end cover. An explosion-proof valve is mounted on the end cover and serves to provide timely pressure relief by discharging gas when the internal pressure of the sealed cavity increases sharply.

In the related art, when the cell is subjected to impact, collision, or dropping, an electrolyte in the cell is prone to impact the explosion-proof valve, causing false triggering of the explosion-proof valve. In addition, during the cell manufacturing process, it is difficult to achieve precise alignment of the current-collector disk and the end cover, making it difficult to ensure that the current-collector disk can block the electrolyte from impacting the explosion-proof valve. As a result, the safety performance and the service life of the cell may be adversely affected.

## SUMMARY

The present disclosure aims to provide an end cover assembly, an energy storage apparatus, and a method for mounting and positioning an end cover assembly, so as to solve the technical problem as follows. In the related art, it is difficult to achieve precise alignment of a current-collector disk and an end cover, making it difficult to ensure that the current-collector disk can block an electrolyte from impacting an explosion-proof valve.

To achieve the object of the present disclosure, the present disclosure provides following technical solutions.

In a first aspect, the present disclosure provides an end cover assembly. The end cover assembly includes an end cover and a current-collector disk. The end cover is provided with an explosion-proof valve and defines a liquid-injection hole. The liquid-injection hole is spaced apart from the explosion-proof valve. The current-collector disk is coaxial with the end cover. The current-collector disk includes a main body portion. The main body portion defines a groove on a surface of the main body portion positioned facing towards the end cover. The groove extends from a center of the main body portion to an edge of the main body portion in a radial direction of the main body portion. The main body portion is provided with a visual identification portion. The visual identification portion has a visual identification characteristic different from a region of the main body portion other than the visual identification portion. The liquid-injection hole is configured for alignment of the end cover and the current-collector disk through the visual identification portion, to make the explosion-proof valve positioned opposite to the groove in an axial direction of the current-collector disk, and an orthographic projection of the explosion-proof valve on the current-collector disk overlap the groove by an area greater than or equal to 30% of an area of the orthographic projection of the explosion-proof valve.

In a second aspect, the present disclosure provides an energy storage apparatus. The energy storage apparatus includes the end cover assembly provided in any embodiment of the first aspect.

In a third aspect, the present disclosure provides a method for positioning an end cover assembly, which is applicable to the end cover assembly provided in any embodiment of the first aspect. The method for positioning an end cover assembly includes the following. A position of the explosion-proof valve relative to the current-collector disk is adjusted according to the visual identification portion. The explosion-proof valve is determined to be positioned opposite to the groove in the axial direction of the current-collector disk.

The end cover assembly, the energy storage apparatus, and a method for mounting and positioning an end cover assembly are provided in the embodiments of the present disclosure. By defining the liquid-injection hole and utilizing the visual identification portion, the end cover is aligned with the current-collector disk, thereby facilitating precise alignment of the current-collector disk and the end cover during the manufacturing process of the energy storage apparatus. Therefore, the explosion-proof valve is positioned opposite to the groove in the axial direction of the current-collector disk, and the orthographic projection of the explosion-proof valve on the current-collector disk is at least partially located in the groove. When the energy storage apparatus is subjected to impact, collision, or dropping, an electrolyte inside a housing of the energy storage apparatus tends to impact one side where the current-collector disk and the end cover are located. However, due to the blocking and rebound effect of the groove, a flow direction of the electrolyte is deflected, so that the electrolyte is not easy to directly impact the explosion-proof valve. Therefore, the pressure applied to the explosion-proof valve is reduced, and the probability of accidental triggering of the explosion-proof valve caused by the impact of the electrolyte is reduced, thereby helping to improve the safety performance of the energy storage apparatus and prolong the service life of the energy storage apparatus.

## BRIEF DESCRIPTION OF THE DRAWINGS

To more clearly describe implementations in the present disclosure or technical solutions in related art, the accompanying drawings that need to be used in description of implementations or the related art will be briefly introduced below. Apparently, the accompanying drawings in the following description are only some implementations in the present disclosure, and those of ordinary skill in the art may also obtain other accompanying drawings based on these accompanying drawings without creative effort.

FIG. 1 is a schematic structural view of a household energy storage system according to an embodiment.
FIG. 2 is a schematic structural view of an end cover assembly according to an embodiment.
FIG. 3 is a schematic structural view of an end cover according to an embodiment.
FIG. 4 is a schematic structural view of a current-collector disk according to an embodiment.
FIG. 5 is a schematic view of a relative position of a current-collector disk and an explosion-proof valve according to an embodiment.
FIG. 6 is a schematic flowchart of a method for mounting and positioning an end cover assembly according to an embodiment.

Description of reference signs: 100 - energy storage apparatus; 200 - electric energy conversion apparatus; 300 - user load; 1 - end cover; 11 - explosion-proof valve; 12 - liquid-injection hole; 13 - mounting hole; 2 - current-collector disk; 21 - main body portion; 22 - groove; 23 - air-permeable hole region; 231 - through hole; 24 - boss; 25 - visual identification portion.

## DETAILED DESCRIPTION

The following will illustrate clearly technical solutions of implementations of the present disclosure with reference to accompanying drawings of implementations of the present disclosure. The implementations illustrated herein are merely some, rather than all implementations, of the present disclosure. Based on the implementations of the present disclosure, other implementations obtained by those of ordinary skill in the art shall fall within the protection scope of the present disclosure.

It is to be noted that, when a component (element or member) is deemed as being "fixed" or "secured" to another component (element or member), the component (element or member) can be directly on the other component (element or member) or there may be an intermediate component (element or member) between the two components (elements or members). When a component (element or member) is considered to be "connected" or "coupled" to another component (element or member), the component (element or member) may be directly connected or coupled to the other component (element or member) or there may be an intermediate component (element or member) between the two components (elements or members).

In the present disclosure, unless otherwise clearly specified and limited, terms such as "mount", "connect", "connected to", "fix" and the like should be understood in a broad sense. For example, it may be fixed connection or detachable connection or integral connection; mechanical connection, electrical connection or communicating with each other; direct connection or indirect connection through an intermediate; or internal communication of two components or an interaction relationship between two components, unless otherwise clearly limited. For those of ordinary skill in the art, the specific meaning of the above terms in the present disclosure can be understood according to specific circumstances.

Unless otherwise defined, all technical and scientific terms used herein have the same meaning as commonly understood by those skilled in the art of the present disclosure. The terms used herein in the present disclosure are for the purpose of describing specific embodiments only and are not intended to limit the present disclosure. The term "and/or" used herein includes any and all combinations of one or more related listed items.

In the description of embodiments of the present disclosure, it may be noted that orientation or positional relations indicated by terms such as "center", "on", "under", "left", "right", "vertical", "horizontal", "in", "out", and the like are orientation or positional relations based on the accompanying drawings, only for facilitating description of the present disclosure and simplifying the description, rather than explicitly or implicitly indicating the referred apparatuses or elements must be in a particular orientation or constructed or operated in the particular orientation, and therefore they may not be construed as limiting the present disclosure.

In addition, terms "first", "second", and the like are only used for description and cannot be understood as explicitly or implicitly indicating relative importance or implicitly indicating the number of technical features referred to herein. Therefore, features restricted by terms "first", "second", and the like can explicitly or implicitly include at least one of the features. In the description of the present disclosure, unless stated otherwise, "multiple" refers to "at least two", such as two, three, and the like.

Some implementations of the present disclosure will be described in detail below with reference to the accompanying drawings. The following embodiments and features in the embodiments can be combined with each other without conflict.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy.

At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus 100 is provided in embodiments of the present disclosure. The energy storage apparatus 100 includes chemical batteries. Chemical elements in the chemical batteries can be used as an energy storage medium to implement a charging/-discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including power-generation-side energy storage, grid-side energy storage, renewable energy grid-connected energy storage, user-side energy storage, etc. Corresponding types of energy storage apparatuses include the following.

(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.

(2) Small and medium-sized energy storage cabinets are used in industrial and commercial energy storage scenarios (banks, shopping malls, etc.) on the user side and small household energy storage boxes used in household energy storage scenarios on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills. In addition, in remote regions, as well as regions prone to natural disasters such as earthquakes and hurricanes, the presence of household energy storage devices is equivalent to users providing backup power for themselves and the power grid, eliminating the inconvenience caused by frequent power outages due to disasters or other reasons.

The embodiments of the present disclosure are illustrated by taking the household energy storage scenario in user-side energy storage as an example, and an energy storage apparatus 100 provided in the embodiments of the present disclosure is not limited to the household energy storage scenario.

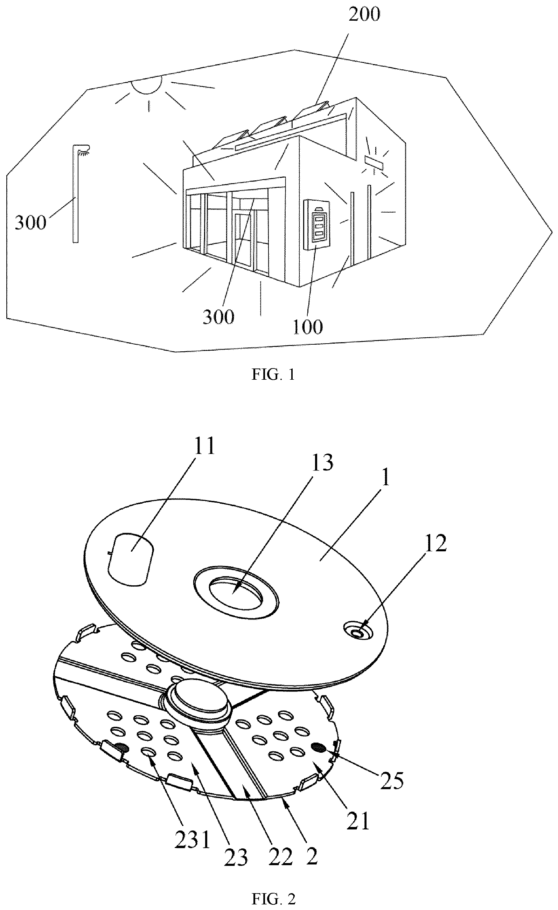

A household energy storage system is provided in embodiments of the present disclosure. As illustrated in FIG. 1, the household energy storage system includes a electric energy conversion apparatus 200, a user load 300, and an energy storage apparatus 100. The energy storage apparatus 100 is a small energy storage box that can be mounted on an outdoor wall by means of wall hanging. The user load 300 may be a street lamp or a household appliance, etc. Specifically, the electric energy conversion apparatus 200 may be a photovoltaic panel. The photovoltaic panel can convert solar energy into electric energy during the period of low electricity prices. The energy storage apparatus 100 is configured to store the electric energy and supply it to the street lamp and household appliance for use when the electricity price is at a peak, or to supply power when the power grid is off/out of power.

It can be understood that the energy storage apparatus 100 may include, but is not limited to, a single cell, a cell module, a cell pack, a cell system, etc. The single cell may be, but is not limited to, at least one of a cylindrical cell, a square cell, etc.

An electricity-consumption device is provided in the present disclosure. The electricity-consumption device includes an energy storage apparatus 100. The energy storage apparatus 100 is configured to supply power to the electricity-consumption device. The electricity-consumption device may include a user load 300, a vehicle, an electronic device, a household appliance, etc.

Specifically, the energy storage apparatus 100 includes an end cover assembly, an electrode assembly, and a housing. The electrode assembly is located in a space enclosed by the housing. The end cover 1 of the end cover assembly is connected to the housing and is used for closing an opening at one side of the housing.

As illustrated in FIG. 2 to FIG. 5, the end cover assembly provided in the embodiments of the present disclosure includes an end cover 1 and a current-collector disk 2. The end cover 1 is provided with an explosion-proof valve 11 and defines a liquid-injection hole 12. The liquid-injection hole 12 is spaced apart from the explosion-proof valve 11. The current-collector disk 2 is coaxial with the end cover 1. The current-collector disk 2 includes a main body portion 21. The main body portion 21 defines a groove 22 on a surface of the main body portion 21 positioned facing towards the end cover 1. The groove 22 extends from the center of the main body portion 21 to an edge of the main body portion 21 in a radial direction of the main body portion 21. The main body portion 21 is provided with a visual identification portion 25. The visual identification portion 25 has a visual identification characteristic different from a region of the main body portion 21 other than the visual identification portion 25.

The liquid-injection hole 12 is configured for alignment of the end cover 1 and the current-collector disk 2 through the visual identification portion 25, so that the explosion-proof valve 11 is positioned opposite to the groove 22 in the axial direction of the current-collector disk 2. An orthographic projection of the explosion-proof valve 11 on the current-collector disk 2 overlaps the groove 22 by an area greater than 30% of an area of the orthographic projection of the explosion-proof valve 11.

Exemplarily, the end cover assembly provided in the embodiment of the present disclosure is applied to a cylindrical cell. The cylindrical cell includes a casing and an electrode assembly. Each of two ends of the electrode assembly is welded to one current-collector disk 2. The end cover 1 is fixedly connected to an open end of the casing to define a sealed cavity. The electrode assembly is located in the sealed cavity. One current-collector disk 2 is welded to the bottom of the casing, and the other current-collector disk 2 is electrically connected to a terminal post on the end cover 1. The current-collector disk 2 provided in the embodiment of the present disclosure may be a positive current-collector disk or a negative current-collector disk, which can be flexibly selected according to actual requirements. For example, when the current-collector disk 2 is made of aluminum, the current-collector disk 2 can be used as a positive current-collector disk to be welded to an end cover 1 made of aluminum.

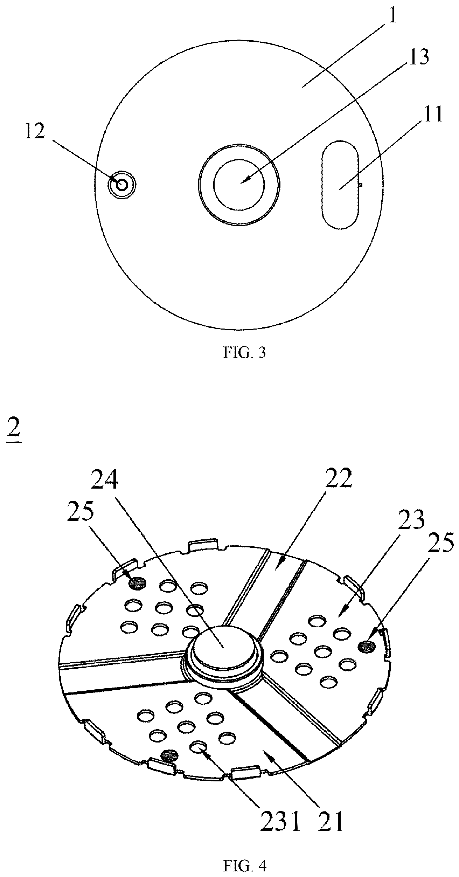

As illustrated in FIG. 4, the main body portion 21 of the current-collector disk 2 may be in the shape of a circular plate, so that the cross-sectional shape of the current-collector disk 2 can be adapted to the casing of the cylindrical cell. Therefore, the current-collector disk 2 can be widely applied to the cylindrical cell, which is conducive to attachment between the current-collector disk 2 and each of a wound electrode assembly and the end cover 1, thereby ensuring the sealed connection between the current-collector disk 2 and the casing of the cylindrical cell.

When an abnormality occurs in the energy storage apparatus 100, a large amount of gas may be generated in a sealed cavity of the energy storage apparatus 100, causing a sharp increase in gas pressure in the sealed cavity of the energy storage apparatus 100. If the large amount of gas in the sealed cavity of the energy storage apparatus 100 is not discharged in time, there is a high risk of explosion of the energy storage apparatus 100, leading to a safety accident. By providing the explosion-proof valve 11 on the end cover 1, the gas in the sealed cavity of the energy storage apparatus 100 can be discharged in time, thereby reducing the safety risk. Exemplarily, the explosion-proof valve 11 is in a sheet shape, and defines a stress-weak region on the explosion-proof valve 11. When the pressure on the explosion-proof valve 11 caused by the gas pressure in the sealed cavity of the energy storage apparatus 100 reaches the maximum pressure that the stress-weak region can withstand, the stress-weak region of the explosion-proof valve 11 will be broken, so that a large amount of gas in the sealed cavity is discharged, and the gas pressure in the sealed cavity is relieved in time.

The main body portion 21 has a first surface and a second surface opposite to the first surface. Specifically, when the end cover assembly is assembled to the energy storage apparatus 100, the first surface is a surface positioned facing away from the electrode assembly, and the second surface of the main body portion 21 is surface positioned facing towards the electrode assembly. The groove 22 is recess in the main body portion 21 and extends from a central axis of the main body portion 21 to an edge of the main body portion 21. The groove 22 serves to provide a welding space for the current-collector disk 2 and the electrode assembly. The groove 22 is recessed relative to the first surface. The groove 22 extends in the radial direction of the main body portion 21. The groove 22 can be obtained by stamping the first surface of the main body portion 21, and a corresponding protrusion is formed on the second surface.

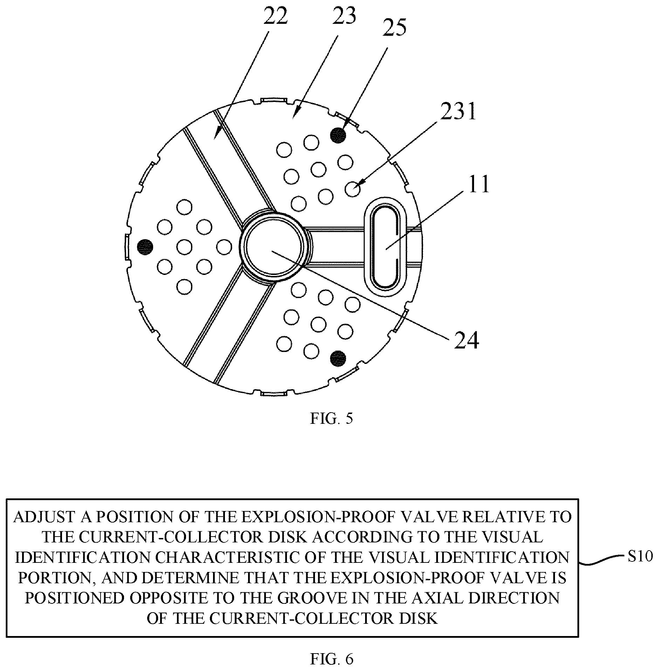

The liquid-injection hole 12 is configured for alignment of the end cover 1 and the current-collector disk 2 through the visual identification portion 25 during the mounting process of the end cover assembly. Since the main body portion 21 is provided with the visual identification portion 25, and the visual identification portion 25 has the visual identification characteristic different from the region of the main body portion 21 other than the visual identification portion 25, the end cover 1 and the current-collector disk 2 can be aligned based on identification, distinguishing, or judgment of the visual identification portion 25. Exemplarily, through the liquid-injection hole 12, the identification, distinguishing, or judgement of the visual characteristic can be performed on the surface of the current-collector disk 2, and the position of the explosion-proof valve 11 relative to the current-collector disk 2 is adjusted, so as to ensure that the explosion-proof valve 11 is positioned opposite to the groove 22 in the axial direction of the current-collector disk 2, and the orthographic projection of the explosion-proof valve 11 on the current-collector disk 2 is at least partially located in the groove 22. It can be understood that, the orthographic projection of the explosion-proof valve 11 on the current-collector disk 2 is a projection of the explosion-proof valve 11 in a direction parallel to the central axis of the current-collector disk 2 and pointing from the end cover 1 to the current-collector disk 2. As illustrated in FIG. 5, when viewed in the axial direction of the current-collector disk 2, the explosion-proof valve 11 at least partially overlaps the groove 22. When the electricity storage device 100 is subjected to impact due to collision or dropping, if the electrolyte immersing the electrode assembly is impulsively driven from a position where the electrode assembly is located to a position where the explosion-proof valve 11 is located, the electrolyte is blocked by the groove 22, and the groove 22 absorbs part of impact caused by the electrolyte and plays a buffering role for the explosion-proof valve 11. Therefore, the impact pressure from the electrolyte on the explosion-proof valve 11 can be reduced, and the explosion-proof valve 11 is prevented from being accidentally triggered and broken caused by the impact of the electrolyte, thereby helping to improve the safety performance of the energy storage apparatus 100 and prolong the service life of the energy storage apparatus 100.

As illustrated in FIG. 3 and FIG. 4, the end cover 1 defines a mounting hole 13 at a central axis position of the end cover 1, and a boss 24 protruding outwardly from the first surface is provided at a central axis position of the current-collector disk 2. The boss 24 is inserted into the mounting hole 13 to achieve the connection between the end cover 1 and the current-collector disk 2. Optionally, the boss 24 is rotatably inserted in the mounting hole 13, so that the end cover 1 and the current-collector disk 2 can rotate relative to each other, thereby facilitating the adjustment of the relative position of the explosion-proof valve 11 relative to the current-collector disk 2.

According to the end cover assembly provided in the embodiments of the present disclosure, by defining the liquid-injection hole 12 and utilizing the visual identification portion 25, the end cover 1 is aligned with the current-collector disk 2, thereby facilitating precise alignment of the current-collector disk 2 and the end cover 1 during the manufacturing process of the energy storage apparatus 100. Therefore, the explosion-proof valve 11 is positioned opposite to the groove 22 in the axial direction of the current-collector disk 2, and the orthographic projection of the explosion-proof valve 11 on the current-collector disk 2 is at least partially located in the groove 22. When the energy storage apparatus 100 is subjected to impact, collision, or dropping, an electrolyte inside a housing of the energy storage apparatus 100 tends to impact one side where the current-collector disk 2 and the end cover 1 are located. However, due to the blocking and rebound effect of the groove 22, a flow direction of the electrolyte is deflected, so that the electrolyte is not easy to directly impact the explosion-proof valve 11. Therefore, the pressure on the explosion-proof valve 11 is reduced, and the probability of accidental triggering of the explosion-proof valve 11 caused by the impact of the electrolyte is reduced, thereby helping to improve the safety performance of the energy storage apparatus 100 and prolong the service life of the energy storage apparatus 100.

In a further embodiment, the orthographic projection of the explosion-proof valve 11 on the current-collector disk 2 overlaps the groove 22 by the area greater than 80% of the area of the orthographic projection of the explosion-proof valve 11. In this embodiment, by designing an overlapping area of the orthographic projection of the explosion-proof valve 11 and the groove 22 to be greater than 80% of the area of the orthographic projection of the explosion-proof valve 11, it is ensured that the blocking and rebound effect of the groove 22 on the electrolyte from the electrode assembly, thereby preventing the explosion-proof valve 11 from being accidentally triggered and broken caused by the impact of the electrolyte.

In a specific embodiment, the visual identification characteristic of the visual identification portion 25 includes at least one of a color, a pattern, or transparency. It can be understood that the color may include multiple color attributes such as hue, saturation, brightness, color scale, and grayscale.

Exemplarily, the color of the visual identification portion 25 is different from the color of the region of the main body portion 21 other than the visual identification portion 25. For example, the visual identification portion 25 appears black, while the region of the main body portion 21 other than the visual identification portion 25 appears silver. When it is identified and determined that the color of the region aligned with the liquid-injection hole 12 is black, the region aligned with the liquid-injection hole 12 can be determined as the visual identification portion 25. Accordingly, the relative position of the explosion-proof valve 11 relative to the current-collector disk 2 can be determined, thereby facilitating further adjustment of the opposite arrangement of the explosion-proof valve 11 and the groove 22 in the axial direction of the current-collector disk 2, and enabling the positioning of the end cover 1 and the current-collector disk 2.

Exemplarily, the pattern of the visual identification portion 25 is different from the pattern of the region of the main body portion 21 other than the visual identification portion 25. For example, the visual identification region is provided with a stripe pattern, while the region of the main body portion 21 other than the visual identification portion 25 is provided with no pattern or a pattern of a different shape. When it is identified and determined that the region aligned with the liquid-injection hole 12 has the stripe pattern, the region aligned with the liquid-injection hole 12 can be determined as the visual identification portion 25. Accordingly, the relative position of the explosion-proof valve 11 relative to the current-collector disk 2 can be determined, thereby facilitating further adjustment of the opposite arrangement of the explosion-proof valve 11 and the groove 22 in the axial direction of the current-collector disk 2, and enabling the positioning of the end cover 1 and the current-collector disk 2.

Exemplarily, the transparency of the visual identification portion 25 is different from the transparency of the region of the main body portion 21 other than the visual identification portion 25. For example, the visual identification region is of a transparent or semi-transparent structure, while the region of the main body portion 21 other than the visual identification portion 25 is of an opaque structure. When it is identified and determined that the region aligned with the liquid-injection hole 12 is of a transparent or semitransparent structure, the region aligned with the liquid-injection hole 12 can be determined as the visual identification portion 25. Accordingly, the relative position of the explosion-proof valve 11 relative to the current-collector disk 2 can be determined, thereby further adjust the opposite arrangement of the explosion-proof valve 11 and the groove 22 in the axial direction of the current-collector disk 2, and enabling the positioning of the end cover 1 and the current-collector disk 2.

In an embodiment, the visual identification portion 25 includes a first anti-reflective layer formed by coating a black anti-reflective paint. The first anti-reflective layer functions to avoid laser reflection and affect welding effect when welding is directly performed on the first anti-reflective layer. By providing the first anti-reflective layer, not only laser reflection can be avoided when laser welding is performed on the current-collector disk 2 and the electrode assembly, but also the first anti-reflective layer can be used as a visual identification characteristic without additionally processing the visual identification portion 25, thereby contributing to the saving of paint cost, reducing the process cycle time, and improving the efficiency. It can be understood that, in this embodiment, the region other than the visual identification portion 25 is a color other than black, such as silver.

In an embodiment, a deflection angle of the groove 22 relative to the visual identification portion 25 is identical to a deflection angle of the explosion-proof valve 11 relative to the liquid-injection hole 12. When the liquid-injection holes 12 is positioned opposite to the visual identification portion 25 in the axial direction of the current-collector disk 2, the explosion-proof valve 11 is positioned opposite to the groove 22 in the axial direction of the current-collector disk 2. In addition, the orthographic projection of the explosion-proof valve 11 on the current-collector disk 2 overlaps the groove 22 by the area greater than 30% of the area of the orthographic projection of the explosion-proof valve 11. It can be understood that, the deflection angle of the groove 22 relative to the visual identification region is an angle between a connecting line of the geometric center of the groove 22 and the central axis of the current-collector disk 2 and a connecting line of the geometric center of the visual identification region and the central axis of the current-collector disk 2. The deflection angle of the explosion-proof valve 11 relative to the liquid-injection hole 12 is an angle between a connecting line of the geometric center of the explosion-proof valve 11 and the central axis of the end cover 1 and a connecting line of the central axis of the liquid-injection hole 12 and the central axis of the end cover 1. It should be noted that the deflection angle is a vector having both a magnitude and a direction. The deflection angle of the groove 22 relative to the visual identification portion 25 is identical to the deflection angle of the explosion-proof valve 11 relative to the liquid-injection hole 12, that is, the deflection direction of the groove 22 relative to the visual identification portion 25 is identical to the deflection direction of the explosion-proof valve 11 relative to the liquid-injection hole 12, and the magnitude of the deflection angle of the groove 22 relative to the visual identification portion 25 is equal to the magnitude of the deflection angle of the explosion-proof valve 11 relative to the liquid-injection hole 12. There may be one or multiple grooves 22 and there may be one or multiple visual identification portions 25. When there are multiple grooves 22 and multiple visual identification portions 25, the end cover 1 can be aligned with the current-collector disk 2 by means of alignment of the liquid-injection hole 12 and each of the multiple visual identification portions 25, thereby reducing difficulty in mounting and positioning the end cover assembly, and facilitating improvement of production efficiency of the end cover assembly.

By designing the deflection angle of the groove 22 relative to the visual identification portion 25 to be identical to the deflection angle of the explosion-proof valve 11 relative to the liquid-injection hole 12, in the process of aligning the end cover assembly through the liquid-injection hole 12, it is only necessary to align the liquid-injection hole 12 with the visual identification portion 25, to make the liquid-injection hole 12 positioned opposite to the visual identification portion 25 in the axial direction of the current-collector disk 2, so that the position of the explosion-proof valve 11 can be aligned with the position of the groove 22. By positioning the explosion-proof valve 11 opposite to the groove 22 in the axial direction of the current-collector disk 2, the difficulty in mounting and positioning the end cover assembly is reduced, thereby helping to achieve the alignment of the end cover 1 and the current-collector disk 2 quickly.

In an embodiment, the visual identification portion 25 is implemented as multiple visual identification portions 25, and the groove 22 is implemented as multiple grooves 22. The multiple visual identification portions 25 and the multiple grooves 22 are alternately distributed one by one on the main body portion 21. Specifically, the multiple grooves 22 are arranged at intervals in the circumferential direction of the main body portion 21, and one visual identification portion 25 is provided between any two adjacent grooves 22. For example, as illustrated in FIG. 5, there are three grooves 22 and three visual identification portions 25, and the three grooves 22 and the three visual identification portions 25 are alternately distributed one by one on the main body portion 21. By defining multiple grooves 22, multiple welding positions are provided for the current-collector disk 2 and the electrode assembly, thereby ensuring the stability and reliability of the connection between the current-collector disk 2 and the electrode assembly. By providing multiple visual identification portions 25 on the main body portion 21, in the mounting process of the end cover assembly, the current-collector disk 2 can be aligned with the end cover 1 just by means of one of the multiple visual identification portions 25. Therefore, the difficulty in aligning the end cover 1 and the current-collector disk 2 by means of the visual identification portion 25 can be reduced, thereby helping to improve the alignment and mounting efficiency of the end cover assembly.

Further, at least two of the multiple visual identification portions 25 have different visual identification characteristics. The different visual identification characteristics may be represented as different forms of the same type of visual identification characteristic. For example, the color of one identification portion is black, and the color of the other identification portions is red; The different visual identification characteristics may also be represented as different types of visual identification characteristics. For example, the color of one visual identification portion 25 is black, and the other visual identification portions 25 are translucent or transparent structures.

By designing at least two visual identification portions 25 to have different visual identification characteristics, it is beneficial to distinguish the multiple visual identification portions 25, and it is convenient to specifically adjust the position of the explosion-proof valve 11 relative to the current-collector disk 2 according to different visual identification portions 25. Therefore, the positioning of the end cover 1 and the current-collector disk 2 can be achieved, and the explosion-proof valve 11 can be prevented from being accidentally triggered by the impact of the electrolyte.

In a specific embodiment, the liquid-injection hole 12 and the explosion-proof valve 11 are distributed in a radial direction of the end cover 1. Each of the multiple grooves 22 is positioned opposite to one of the multiple visual identification portions 25 in a radial direction of the current-collector disk 2. As illustrated in FIG. 3, a connecting line of the liquid-injection hole 12 and the central axis of the end cover 1 and a connecting line of the explosion-proof valve 11 and the central axis of the end cover 1 are located on the same straight line, and an angle between the liquid-injection hole 12 and the explosion-proof valve 11 is 180 degrees. As illustrated in FIG. 4, there are three grooves 22 and three visual identification portions 25. The three grooves 22 are distributed evenly on the main body portion 21, and the three visual identification portions 25 are distributed evenly on the main body portion 21. The three grooves 22 and the three visual identification portions 25 are alternately distributed one by one on the main body portion 21. Each of the three grooves 22 is positioned opposite to one of the three visual identification portions 25 in the radial direction of the current-collector disk 2. In this embodiment, by aligning the liquid-injection hole 12 with any one of the three visual identification portions 25, the explosion-proof valve 11 can be positioned opposite to one of the three grooves 22 in the axial direction of the current-collector disk 2, thereby reducing the difficulty in mounting and positioning the end cover assembly, and facilitating quick alignment of the end cover 1 and the current-collector disk 2.

In an optional embodiment, a shape of the visual identification portion 25 matches a shape of the liquid-injection hole 12. For example, when the liquid-injection hole 12 is a circular hole, the visual identification portion 25 is also circular. By designing the shape of the visual identification portion 25 to match the shape of the liquid-injection hole 12, the visual identification portion 25 can be distinguished from other regions on the main body portion 21 during alignment, and the visual identification portion 25 can be quickly identified, thereby improving the alignment efficiency of the end cover 1 and the current-collector disk 2.

Further, an area of an orthographic projection of the liquid-injection hole 12 on the current-collector disk 2 is smaller than an area of the visual identification portion 25. A ratio of the area of the orthographic projection of the liquid-injection hole 12 on the current-collector disk 2 to the area of the visual identification portion 25 ranges from 0.51 to 0.98. Therefore, the visual identification portion 25 can be quickly and effectively identified when the current-collector disk 2 is identified through the liquid-injection hole 12, thereby facilitating quick alignment of the end cover 1 and the current-collector disk 2.

In an embodiment, the end cover 1 is provided with an anti-reflective layer on a surface of the end cover 1 close to the current-collector disk 2. The anti-reflective layer can prevent an identification effect of the visual identification portion 25 from being affected by the reflection on the surface of the end cover 1. Specifically, the anti-reflective layer may be a titanium carbonitride coating, a silicone rubber or a silicone-type coating, which cannot only prevent reflection, but also avoid the problems of scraping fine debris and short circuit caused by contact between the end cover 1 and the housing of the energy storage apparatus 100. In addition, the electrolyte does not corrode the anti-reflective layer, thereby preventing the failure of the anti-reflective layer. Optionally, the anti-reflective layer is black in color to further improve the anti-reflective effect.

The main body portion 21 further defines an air-permeable hole region 23 with multiple through holes 231 at intervals. The visual identification portion 25 is located in the air-permeable hole region 23. The through hole 231 extends through the main body portion 21 in the thickness direction of the main body portion 21. By designing the air-permeable hole region 23, a gas pressure-relief channel is added, which is beneficial to guiding out gas when the electrode assembly is out of control, ensuring the amount of gas required for normal opening of the explosion-proof valve 11. Therefore, gas pressure relief is performed through the explosion-proof valve 11 in time, thereby preventing the pressure inside the energy storage apparatus 100 from being too high, and improving the safety and reliability of the energy storage apparatus 100.

The multiple through holes 231 can be distributed in an array on the main body portion 21, so that the uniformity and timeliness of pressure relief of the gas pressure-relief channel can be improved. For example, the multiple through holes 231 are distributed in a ring shape on the main body portion 21. For another example, the multiple through holes 231 are distributed on the main body portion 21 in rows in the radial direction of the main body portion 21. In a specific embodiment, as illustrated in FIG. 4, there are eight through holes 231 in the air-permeable hole region 23, and the eight through holes 231 are distributed in a rectangle-like array.

Optionally, the inner diameter of the through hole 231 is larger than the inner diameter of the liquid-injection hole 12. In the process of injecting the electrolyte into the electrode assembly through the liquid-injection hole 12, the liquid-injection hole 12 can be coaxially aligned with one of the multiple through holes 231, and the electrolyte is directly injected into the electrode assembly through the current-collector disk 2, thereby improving the liquid-injection efficiency.

Further, a distance between each of the multiple through holes 231 and the central axis of the current-collector disk 2 is less than a distance between the liquid-injection hole 12 and the central axis of the end cover 1. Therefore, the orthographic projection of the liquid-injection hole 12 on the current-collector disk 2 does not overlap the through hole 231, thereby preventing an identification effect of the visual identification portion 25 from being affected by the through hole 231 in the process of positioning through the liquid-injection hole 12.

Optionally, a shape of the visual identification portion 25 is different from a shape of each of the multiple through holes 231. For example, when the through hole 231 is a circular hole, the visual identification portion 25 has a shape different from a circular shape, such as an ellipse or a rectangle. By designing the shape of the visual identification portion 25 to be different from the shape of the through hole 231, the visual identification portion 25 can be distinguished from the through hole 231 in the alignment process, and the visual identification portion 25 can be quickly identified, thereby improving the alignment efficiency of the end cover 1 and the current-collector disk 2.

Furthermore, an area of the visual identification portion 25 is larger than an opening area of each of the multiple through holes 231. A ratio of the area of the visual identification portion 25 to the opening area of said each of the multiple through holes 231 ranges from 1.05 to 1.76. Therefore, the visual identification portion 25 can be quickly identified, and the alignment efficiency of the end cover 1 and the current-collector disk 2 can be improved. It should be noted that the area of the through hole 231 is an area of the through hole 231 on the surface of the current-collector disk 2 positioned facing towards the end cover 1.

A method for mounting and positioning an end cover assembly is further provided in the present disclosure. The method for mounting and positioning an end cover assembly is applicable to the end cover assembly provided in any one of the described embodiments. As illustrated in FIG. 6, the method for mounting and positioning an end cover assembly includes the following.

S10, a position of the explosion-proof valve 11 relative to the current-collector disk 2 is adjusted according to the visual identification portion 25, and the explosion-proof valve 11 is determined to be positioned opposite to the groove 22 in the axial direction of the current-collector disk 2.

The end cover assembly includes the end cover 1 and the current-collector disk 2. The end cover 1 is provided with the explosion-proof valve 11 and defines the liquid-injection hole 12. The liquid-injection hole 12 is spaced apart from the explosion-proof valve 11. The current-collector disk 2 is coaxial with the end cover 1. The current-collector disk 2 includes the main body portion 21. The main body portion 21 defines the groove 22 on the surface of the main body portion 21 positioned facing towards the end cover 1. The groove 22 extends from the center of the main body portion 21 to the edge of the main body portion 21 in the radial direction of the main body portion 21. The main body portion 21 is provided with the visual identification portion 25. The visual identification portion 25 has the visual identification characteristic different from the region of the main body portion 25 other than the visual identification portion 25. The liquid-injection hole 12 is configured for alignment of the end cover 1 and the current-collector disk 2 through the visual identification portion 25, so that the explosion-proof valve 11 is positioned opposite to the groove 22 in the axial direction of the current-collector disk 2, and on the current-collector disk 2, the orthographic projection of the explosion-proof valve 11 overlaps the groove 22 by the area greater than 30% of the area of the orthographic projection of the explosion-proof valve 11.

At S10, the position of the explosion-proof valve 11 relative to the current-collector disk 2 is adjusted manually or by a driving apparatus, based on the identification of the visual identification portion 25 by an identification apparatus. Specifically, the position of the explosion-proof valve 11 relative to the groove 22 on the current-collector disk 2 is adjusted until the explosion-proof valve 11 is positioned opposite to the groove 22 in the axial direction of the current-collector disk 2. In this case, the orthographic projection of the explosion-proof valve 11 on the current-collector disk 2 is at least partially located in the groove 22. When the energy storage apparatus 100 is impacted due to collision or dropping, if the electrolyte immersing the electrode assembly is impulsively driven from a position where the electrode assembly is located to a position where the explosion-proof valve 11 is located, the electrolyte is blocked by the groove 22, and the groove 22 absorbs part of impact caused by the electrolyte and plays a buffering role for the explosion-proof valve 11. Therefore, the impact pressure from the electrolyte on the explosion-proof valve 11 can be reduced, and the explosion-proof valve 11 is prevented from being accidentally triggered and broken caused by the impact of the electrolyte, thereby helping to improve the safety performance of the energy storage apparatus 100 and prolong the service life of the energy storage apparatus 100. The identification apparatus may be a camera, a photosensitive sensor, a scanner, or other apparatuses for identifying or scanning visual identification characteristic.

Exemplarily, the driving apparatus is in transmission connection with the end cover 1 and the identification apparatus. The driving apparatus drives the end cover 1 to rotate around its own central axis, to adjust the position of the explosion-proof valve 11 relative to the current-collector disk 2. It can be understood that the identification apparatus moves synchronously with the end cover 1, so that the identification apparatus always identifies and determines the current-collector disk 2 through the liquid-injection hole 12.

According to the method for mounting and positioning an end cover assembly provided in the embodiments of the present disclosure, the position of the explosion-proof valve 11 relative to the current-collector disk 2 is adjusted based on the visual identification portion 25, and the explosion-proof valve 11 is determined to be positioned opposite to the groove 22 in the axial direction of the current-collector disk 2. When the energy storage apparatus 100 is subjected to impact, collision, or dropping, the electrolyte inside the housing of the energy storage apparatus 100 tends to impact one side where the current-collector disk 2 and the end cover 1 are located. However, due to the blocking and rebound effect of the groove 22, the flow direction of the electrolyte is deflected, so that the electrolyte is not easy to directly impact the explosion-proof valve 11. Therefore, the pressure applied to the explosion-proof valve 11 is reduced, and the probability of accidental triggering of the explosion-proof valve 11 caused by the impact of the electrolyte is reduced, thereby helping to improve the safety performance of the energy storage apparatus 100 and prolong the service life of the energy storage apparatus 100.

In a further embodiment, a deflection angle of the groove 22 relative to the visual identification portion 25 is identical to a deflection angle of the anti-explosive valve 11 relative to the liquid-injection hole 12. At S10, determining that the explosion-proof valve 11 is aligned with the groove 22 in the axial direction of the current-collector disk 2, specifically includes the following. The liquid-injection hole 12 is determined to be positioned opposite to the visual identification portion 25.

Since the deflection angle of the groove 22 relative to the visual identification portion 25 is identical to the deflection angle of the explosion-proof valve 11 relative to the liquid-injection hole 12, in the process of aligning the end cover assembly through the liquid-injection hole 12, it is only necessary to align the liquid-injection hole 12 with the visual identification portion 25, to make the liquid-injection hole 12 positioned opposite to the visual identification portion 25 in the axial direction of the current-collector disk 2, so that the position of the explosion-proof valve 11 can be aligned with the position of the groove 22. By positioning the explosion-proof valve 11 opposite to the groove 22 in the axial direction of the current-collector disk 2, the difficulty in mounting and positioning the end cover assembly is reduced, thereby helping to achieve the alignment of the end cover 1 and the current-collector disk 2 quickly.

The visual identification characteristic of the visual identification portion 25 includes at least one of a colour, a pattern, or transparency. Determining that the liquid-injection hole 12 is aligned with the visual identification portion 25, specifically includes the following. A visual identification characteristic of a region aligned with the liquid-injection hole 12 is determined to be the visual identification characteristic of the visual identification portion 25.

In a specific embodiment, the visual identification characteristic includes a color parameter. A color parameter of the visual identification portion 25 is different from a color parameter of the region of the main body portion 21 other than the visual identification portion 25.

It can be understood that the color parameter may include various parameters such as hue, saturation, brightness, color scale, and grayscale. The identification apparatus can perform color identification on the current-collector disk 2 through the liquid-injection hole 12. Since the color parameter of the visual identification portion 25 is different from the color parameter of the region of the main body portion 21 other than the visual identification portion 25, the identification apparatus can distinguish the visual identification portion 25 from other regions, and determine whether the color parameter of the region aligned with the liquid-injection hole 12 is the color parameter of the visual identification portion 25. After the color parameter of the region aligned with the liquid-injection hole 12 is determined to be the color parameter of the visual identification portion 25, the position adjustment of the end cover 1 is stopped, so that the explosion-proof valve 11 is positioned opposite to the groove 22 in the axial direction of the current-collector disk 2, and the alignment of the end cover 1 and the current-collector disk 2 is completed.

Furthermore, the color parameter includes a weighted red-green-blue (RGB) value. The weighted RGB value of the visual identification portion 25 is greater than a preset weighted RGB value. A preset RGB value of a region of the main body portion 21 other than the visual identification portion 25 is less than the preset weighted RGB value. Determining that the visual identification characteristic of the region aligned with the liquid-injection hole 12 is the visual identification characteristic of the visual identification portion 25, includes the following. A weighted RGB value of the region aligned with the liquid-injection hole 12 is obtained. The weighted RGB value of the region aligned with the liquid-injection hole 12 is greater than the preset weighted RGB value.

In this embodiment, the visual identification portion 25 is dark in color, and the region of the main body portion 21 other than the visual identification portion 25 is light in color. The weighted RGB value of the visual identification portion 25 is greater than the weighted RGB value of the region of the main body portion 21 other than the visual identification portion 25. When the identification apparatus identifies that the weighted RGB value of the region aligned with the liquid-injection hole 12 is greater than the preset weighted RGB value, the identification apparatus can determine that the region aligned with the liquid-injection hole 12 is the visual identification portion 25. At this time, the position adjustment of the end cover 1 is stopped, so that the explosion-proof valve 11 is positioned opposite to the groove 22 in the axial direction of the current-collector disk 2, and the alignment of the end cover 1 and the current-collector disk 2 is completed.

Specifically, the weighted RGB value satisfies the following color parameter relation:

$$M = aR + bG + cB,$$

where *M is* the weighted RGB value, *a* is a first weighting coefficient, *b* is a second weighting coefficient, *c* is a third weighting coefficient, *R* is a red component, *G* is a green component, and *B* is a blue component. Obtaining the weighted RGB value of the region aligned with the liquid-injection hole 12, specifically includes the following. The red component, the green component, and the blue component of the region aligned with the liquid-injection hole 12 are obtained. The weighted RGB value of the region aligned with the liquid-injection hole 12 is obtained according to the color parameter relation.

In this embodiment, the red component, the green component, and the blue component of the region aligned with the liquid-injection hole 12 are obtained by the identification apparatus, and the weighted RGB value of the region aligned with the liquid-injection hole 12 is calculated based on the color parameter relation, so that it is convenient to further determine whether the region aligned with the liquid-injection hole 12 is the visual identification portion 25. The first weighting coefficient, the second weighting coefficient, and the third weighting coefficient are preset coefficients. In a specific embodiment, the first weighting coefficient *a* is 0.299, the second weighting coefficient *b* is 0.587, the third weighting coefficient is 0.114, and the preset weighted RGB value is 192. When the weighted RGB value *M* of the region aligned with the liquid-injection hole 12 is greater than 192, the region aligned with the liquid-injection hole 12 can be determined to be the visual identification portion 25.

In the description of this specification of the present specification, the description of referring terms, such as "an embodiment", "some embodiments", "an example", "a specific example" and "some examples", integrate particular features, structures, materials or characteristics described in combination of the embodiments or examples and included in at least one embodiment or example of the present disclosure. In this specification, schematic description of the above terms does not necessarily refer to the same embodiment or example. In addition, the described particular features, structures, materials or characteristics can be integrated with any one or more embodiments or examples in a proper manner. Moreover, in the absence of contradiction, those skilled in the art can integrate and combine different embodiments or examples described in this specification and the features of different embodiments or examples.

The above embodiments disclosed are only one of preferable embodiments of the present disclosure, and cannot be used to limit the scope of the claims of the present disclosure. Those of ordinary skill in the art can understand all or a part of the process to realize the above embodiments of the present disclosure, and the equivalent changes made in accordance with the claims of the present disclosure still belong to the scope of the present disclosure.

**Claims**

1. An end cover assembly, comprising:

     an end cover (1) provided with an explosion-proof valve (11) and defining a liquid-injection hole (12), wherein the liquid-injection hole (12) is spaced apart from the explosion-proof valve (11); and
     a current-collector disk (2) coaxial with the end cover (1), wherein the current-collector disk (2) comprises a main body portion (21), the main body portion (21) defines a groove (22) on a surface of the main body portion (21) positioned facing towards the end cover (1), the groove (22) extends from a center of the main body portion (21) to an edge of the main body portion (21) in a radial direction of the main body portion (21), the main body portion (21) is provided with a visual identification portion (25), and the visual identification portion (25) has a visual identification characteristic different from a region of the main body portion (21) other than the visual identification portion (25);
     wherein the liquid-injection hole (12) is configured for alignment of the end cover (1) and the current-collector disk (2) through the visual identification portion (25), to make the explosion-proof valve (11) positioned opposite to the groove (22) in an axial direction of the current-collector disk (2), and an orthographic projection of the explosion-proof valve (11) on the current-collector disk (2) overlap the groove (22) by an area greater than or equal to 30% of an area of the orthographic projection of the explosion-proof valve (11).

2. The end cover assembly of claim 1, wherein the visual identification characteristic of the visual identification portion (25) comprises at least one of a color, a pattern, or transparency.

3. The end cover assembly of claim 2, wherein the visual identification portion comprises a first anti-reflective layer formed by coating a black anti-reflective paint.

4. The end cover assembly of any one of claims 1 to 3, wherein a deflection angle of the groove (22) relative to the visual identification portion (25) is identical to a deflection angle of the explosion-proof valve (11) relative to the liquid-injection hole (12); and
when the liquid-injection hole (12) is positioned opposite to the visual identification portion (25) in the axial direction of the current-collector disk (2), the explosion-proof valve (11) is positioned opposite to the groove (22) in the axial direction of the current-collector disk (2), and the orthographic projection of the explosion-proof valve (11) on the current-collector disk (2) overlaps the groove (22) by the area greater than 30% of the area of the orthographic projection of the explosion-proof valve (11).

5. The end cover assembly of any one of claims 1 to 4, wherein the visual identification portion (25) is implemented as a plurality of visual identification portions (25), the groove (22) is implemented as a plurality of grooves (22), and the plurality of visual identification portions (25) and the plurality of grooves (22) are alternately distributed one by one on the main body portion (21).

6. The end cover assembly of claim 5, wherein at least two of the plurality of visual identification portions (25) have different visual identification characteristics.

7. The end cover assembly of claim 5 or 6, wherein the liquid-injection hole (12) and the explosion-proof valve (11) are distributed in a radial direction of the end cover (1), and each of the plurality of grooves (22) is positioned opposite to one of the plurality of visual identification portions (25) in a radial direction of the current-collector disk (2).

8. The end cover assembly of any one of claims 1 to 7, wherein a shape of the visual identification portion (25) matches a shape of the liquid-injection hole (12).

9. The end cover assembly of claim 8, wherein an area of an orthographic projection of the liquid-injection hole (12) on the current-collector disk (2) is smaller than an area of the visual identification portion (25), and a ratio of the area of the orthographic projection of the liquid-injection hole (12) on the current-collector disk (2) to the area of the visual identification portion (25) ranges from 0.51 to 0.98.

10. The end cover assembly of any one of claims 1 to 9, wherein the end cover (1) is provided with a second anti-reflective layer on a surface of the end cover (1) close to the current-collector disk (2).

11. The end cover assembly of any one of claims 1 to 10, wherein the main body portion (21) further defines an air-permeable hole region (23) with a plurality of through holes (231) at intervals, and the visual identification portion (25) is located in the air-permeable hole region (23).

12. The end cover assembly of claim 11, wherein a distance between each of the plurality of through holes (231) and a central axis of the current-collector disk (2) is less than a distance between the liquid-injection hole (12) and the central axis of the end cover (1).

13. The end cover assembly of claim 11 or 12, wherein a shape of the visual identification portion (25) is different from a shape of each of the plurality of through holes (231).

14. The end cover assembly of claim 13, wherein an area of the visual identification portion (25) is larger than an opening area of each of the plurality of through holes (231), and a ratio of the area of the visual identification portion to the opening area of said each of the plurality of through holes ranges from 1.05 to 1.76.

15. The end cover assembly of any one of claims 1 to 14, wherein the orthographic projection of the explosion-proof valve (11) on the current-collector disk (2) overlaps the groove (22) by the area greater than 80% of the area of the orthographic projection of the explosion-proof valve (11).

16. An energy storage apparatus, comprising the end cover assembly of any one of claims 1 to 15.

17. A method for positioning an end cover assembly, applicable to the end cover assembly of any one of claims 1 to 15, wherein the method for positioning an end cover assembly comprises:
adjusting a position of the explosion-proof valve relative to the current-collector disk according to the visual identification characteristic of the visual identification portion, and determining that the explosion-proof valve is positioned opposite to the groove in the axial direction of the current-collector disk.

18. The method for positioning an end cover assembly of claim 17, wherein a deflection angle of the groove relative to the visual identification portion is identical to a deflection angle of the explosion-proof valve relative to the liquid-injection hole; and determining that the explosion-proof valve is positioned opposite to the groove in the axial direction of the current-collector disk, specifically comprises:
determining that the liquid-injection hole is aligned with the visual identification portion.

19. The method for positioning an end cover assembly of claim 18, wherein the visual identification characteristic comprises at least one of a color, a pattern, or transparency; and determining that the liquid-injection hole is aligned with the visual identification portion, specifically comprises:
determining that a visual identification characteristic of a region aligned with the liquid-injection hole is the visual identification characteristic of the visual identification portion.

20. The method for positioning an end cover assembly of claim 19, wherein the visual identification characteristic comprises a color parameter, the color parameter comprises a weighted red-green-blue (RGB) value, the weighted RGB value of the visual identification portion is greater than a preset weighted RGB value, and a preset RGB value of the region of the main body portion other than the visual identification portion is less than the preset weighted RGB value; and determining that the visual identification characteristic of the region aligned with the liquid-injection hole is the visual identification characteristic of the visual identification portion, comprises:

obtaining a weighted RGB value of the region aligned with the liquid-injection hole; and determining that the weighted RGB value of the region aligned with the liquid-injection hole is greater than the preset weighted RGB value.

21. The method for positioning an end cover assembly of claim 20, wherein the weighted RGB value satisfies a following color parameter relation:

$$M = aR + bG + cB,$$

where $M$ is the weighted RGB value, $a$ is a first weighting coefficient, $b$ is a second weighting coefficient, $c$ is a third weighting coefficient, $R$ is a red component, $G$ is a green component, and $B$ is a blue component; and obtaining the weighted RGB value of the region aligned with the liquid-injection hole, specifically comprises:

obtaining the red component, the green component, and the blue component of the region aligned with the liquid-injection hole;
obtaining the weighted RGB value of the region aligned with the liquid-injection hole according to the color parameter relation.

FIG. 1

FIG. 2

y

FIG. 3

FIG. 4

FIG. 5

ADJUST A POSITION OF THE EXPLOSION-PROOF VALVE RELATIVE TO THE CURRENT-COLLECTOR DISK ACCORDING TO THE VISUAL IDENTIFICATION CHARACTERISTIC OF THE VISUAL IDENTIFICATION PORTION, AND DETERMINE THAT THE EXPLOSION-PROOF VALVE IS POSITIONED OPPOSITE TO THE GROOVE IN THE AXIAL DIRECTION OF THE CURRENT-COLLECTOR DISK

—S10

FIG. 6

## INTERNATIONAL SEARCH REPORT

| | International application No. |
|---|---|
| | **PCT/CN2024/072802** |

| A. | CLASSIFICATION OF SUBJECT MATTER |
|---|---|

H01M50/627(2021.01)i; H01M50/152(2021.01)i; H01M4/70(2006.01)n; H01M50/342(2021.01)n

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; ENTXT; IEEE: 电池, 盖, 集流盘, 集流板, 汇流板, 汇流盘, 集电板, 集电盘, 防爆阀, 安全阀, 排气阀, 注液孔, 加液孔, 注入孔, 识别, 定位, 对位, 标识, battery, lid, cover, collecting, plate, disc, explosion, proof, valve, safety, exhaust, electrolyte, liquid, inject, hole, recognition, positioning, alignment, identification

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116345085 A (XIAMEN HAICHEN ENERGY STORAGE TECHNOLOGY CO., LTD.) 27 June 2023 (2023-06-27) claims 1-21, and description, paragraphs 0006-0054 | 1-21 |
| PX | CN 116314846 A (XIAMEN HAICHEN ENERGY STORAGE TECHNOLOGY CO., LTD.) 23 June 2023 (2023-06-23) claims 1-18, description, paragraphs 0064-0117, and figures 1-7 | 1-21 |
| PX | CN 116387772 A (XIAMEN HAICHEN ENERGY STORAGE TECHNOLOGY CO., LTD.) 04 July 2023 (2023-07-04) claims 1-18, description, paragraphs 0073-0126, and figures 1-7 | 1-21 |
| Y | CN 217934126 U (XIAMEN HAICHEN ENERGY STORAGE TECHNOLOGY CO., LTD.) 29 November 2022 (2022-11-29) description, paragraphs 0005-0097, and figures 1-12 | 1-21 |
| Y | CN 113678294 A (SAMSUNG SDI CO., LTD.) 19 November 2021 (2021-11-19) description, paragraphs 0030-0055, and figures 1-5 | 1-21 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/072802** |

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2014293510 A1 (PANASONIC CORP.) 02 October 2014 (2014-10-02)<br>description, paragraphs 0056-0159, and figures 1-21 | 1-21 |
| A | CN 114597504 A (ANHUI LASER ENERGY TECHNOLOGY CO. LTD.) 07 June 2022 (2022-06-07)<br>entire document | 1-21 |
| A | 赵小川 (ZHAO, Xiaochuan). "MATLAB图像处理-能力提高与应用案例 (Non-official translation: MATLAB Image Processing - Capacity Improvement and Application Cases)"<br>*BEIHANG UNIVERSITY PRESS, 2nd edition, January 2019, ISBN: 978-7-5124-2932-1,*<br>31 January 2019 (2019-01-31),<br>page 89 | 1-21 |

Form PCT/ISA/210 (second sheet) (July 2022)

**INTERNATIONAL SEARCH REPORT**
Information on patent family members

International application No.

**PCT/CN2024/072802**

| Patent document cited in search report | | | Publication date (day/month/year) | Patent family member(s) | | | Publication date (day/month/year) |
|---|---|---|---|---|---|---|---|
| CN | 116345085 | A | 27 June 2023 | None | | | |
| CN | 116314846 | A | 23 June 2023 | None | | | |
| CN | 116387772 | A | 04 July 2023 | None | | | |
| CN | 217934126 | U | 29 November 2022 | None | | | |
| CN | 113678294 | A | 19 November 2021 | WO | 2020159071 | A1 | 06 August 2020 |
| | | | | US | 2022131216 | A1 | 28 April 2022 |
| | | | | EP | 3920296 | A1 | 08 December 2021 |
| | | | | EP | 3920296 | A4 | 19 October 2022 |
| | | | | KR | 20200094453 | A | 07 August 2020 |
| US | 2014293510 | A1 | 02 October 2014 | US | 9287059 | B2 | 15 March 2016 |
| | | | | JPWO | 2013088724 | A1 | 27 April 2015 |
| | | | | JP | 6127274 | B2 | 17 May 2017 |
| | | | | WO | 2013088724 | A1 | 20 June 2013 |
| | | | | DE | 112013000605 | T5 | 23 October 2014 |
| CN | 114597504 | A | 07 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310331804